# EUROPEAN PATENT SPECIFICATION

(11) **EP 0 535 867 B1**
(45) Date of publication and mention of the grant of the patent: **02.01.1997**
(21) Application number: 92308713.4
(22) Date of filing: 24.09.1992
(51) Int. Cl.: F16L 19/00, F16B 39/14

(54) **Assembly of screw-threaded components**
Anordnung von mit Gewinde versehenen Teilen
Ensemble d'éléments filetés

(30) Priority: 25.09.1991 GB 9120412
(43) Date of publication of application: 07.04.1993
(73) Proprietor: Adaptaflex Limited, Coleshill Birmingham B46 1HT (GB)
(72) Inventor: McNeil, Sandy c/o Neilsen Design Ass. Pty. Ltd., Hunters Hill, New South Wales 210 (AU)
(74) Representative: Russell, Paul Sidney

(56) References cited:
- EP-A- 0 379 830
- FR-E- 79 036
- US-A- 3 669 472

## Description

This invention relates to an assembly of components comprising interengageable first and second screw-threaded parts and a washer retained between the first and second parts and operatively coupled to the first threaded part to prevent rotation of the washer relative thereto, the washer presenting a first engagement formation which is arranged so to engage with an opposing engagement formation on the second threaded part as operatively to resist mutual rotation between the first and second threaded parts in the unscrewing direction. Such an assembly is known, for example, from US-A-3 669 472.

As is well known, care must be taken whenever an assembly of components secured together by a screw thread is to be subject to vibration. Over a period of time the vibration may tend to loosen the threaded connection, eventually leading to weakening of the connection and parting of the connected components.

There have been numerous proposals for securing screw-threaded connections between components. One class of known locking device utilises spring washers which are clamped axially between the components. These are useful devices in that they are simple and can be re-used many times, but they generally need to be clamped very firmly between the components.

The above-mentioned US-A-3 669 472 describes a locking device of the spring washer type. This comprises a flat metal annulus from which discrete edge portions are raised axially as sprung limbs, free ends of the limbs being rounded to engage in recesses of the relatively rotatable part to resist unscrewing of the part. Unscrewing is effected by overcoming the resistance offered by the engagement of the washer limbs.

It is also well known to use inserts of plastics materials built into one threaded component to bear against the thread of another component. This can create sufficient friction to resist loosening regardless of the tightness of the connection between the components, but after just a few tightening and loosening operations the insert usually wears and ceases to be effective.

Yet another known arrangement is to use a locking device such as a split pin which is passed through a hole in one component and engaged in a hole or recess in the other. In general, such a locking device must be replaced after each use, and tools may be required to insert and remove it.

There are instances where none of these is suitable. For example, screw-threadedly assembled tubular plastics fittings may be utilised as end fittings for flexible tubular conduit providing ducting for electrical cables. The end fittings are used to secure the conduit to a junction box, or other housing, and it can be most important that these fittings should not come apart accidentally. However, they may need to be disassembled occasionally by engineers in the course of maintenance. It is desirable that the engineer should not have to replace any locking components. In such circumstances as with heavy machinery, such end fittings may be subjected to prolonged and substantial vibration in use.

The present invention is characterised in that axial elastic compressibility of the washer is derived from its being of a wavy non-planar annular form, the co-operating engagement formations on the washer and on the second threaded part being arranged to form a ratchet which permits rotation of the second part relative to the washer (and relative to the first part) in screwing-up the assembly, but prevents unscrewing of the second part by rotation in the opposite direction, the washer comprising means accessible in the assembly for enabling an axial deflection of the band of the washer to be effected to disengage the engagement formations and permit unscrewing of the threaded parts.

The washer may be of any suitably springy material. It may form a wholly closed loop. Its axial elasticity may be utilised to pre-tension a joint. Also, engagements between one or more formations on the washer and one or more formations on the second threaded part may be utilised to identify predetermined positions of relative rotation between the two threaded parts. For example, an assembly might be screwed up to a first engagement position in manufacture simply to ensure against accidental disassembly, the assembly being tightened up to a second engagement position subsequently which indicates a correct adjustment for use.

To effect coupling of the washer to the first threaded part, the washer may comprise a pair of second engagement formations arranged to engage with a pair of engagement formations of the first part to prevent relative rotations. These second formations of the washer are preferably distributed evenly to each side of the first engagement formation which co-operates with the second part; they may most satisfactorily be positioned at the opposite ends of a diameter, each at 90° about the axis from the first engagement formation.

Such second engagement formations of the washer can be utilised to provide spacing means limiting the approach of the first threaded part to the second threaded part, whereby to ensure that a separation remains between the first threaded part and the washer at the first engagement formation when the first and second parts are fully assembled. Such separation may be essential to enable axial deflection of the washer to permit unscrewing between the first and second parts; in the absence of such spacing means it might in some circumstances be possible to screw the first and second parts so far together that the washer became fully compressed, preventing the necessary deflection of the washer to permit disassembly.

The co-operating engagement formations on the washer and the second threaded part preferably comprise a projection of the washer which engages in a recess in the second part, but the opposite arrangement could be employed. It is similarly preferred that the second engagement formations on the washer comprise projections which engage in recesses in the first threaded part. Whilst it might be that there was a single first engagement formation provided on the washer and arranged to co-operate with a single formation provided on the second part, it would ordinarily be desirable for at least one or the other of the washer and the second part to be provided with a plurality of similar circumferentially-distributed formations rather than a single formation; it may be most appropriate for a single formation on the washer to be arranged to cooperate with any one of a plurality of formations on the second part.

The assembly may be a coupling for flexible conduit in which the first threaded part is a stub pipe to be attached to a mounting and the second threaded part is a collar which fits sealingly around an end portion of the conduit and secures it to the stub pipe.

An embodiment of the invention will now be described in detail, by way of example, with reference to the accompanying drawings in which:
Figures 1, 2 and 3 are similar views of a conduit coupling embodying the invention and shown in three different conditions;
Figure 4 is a sectional view taken on-line IV-IV of Figure 1;

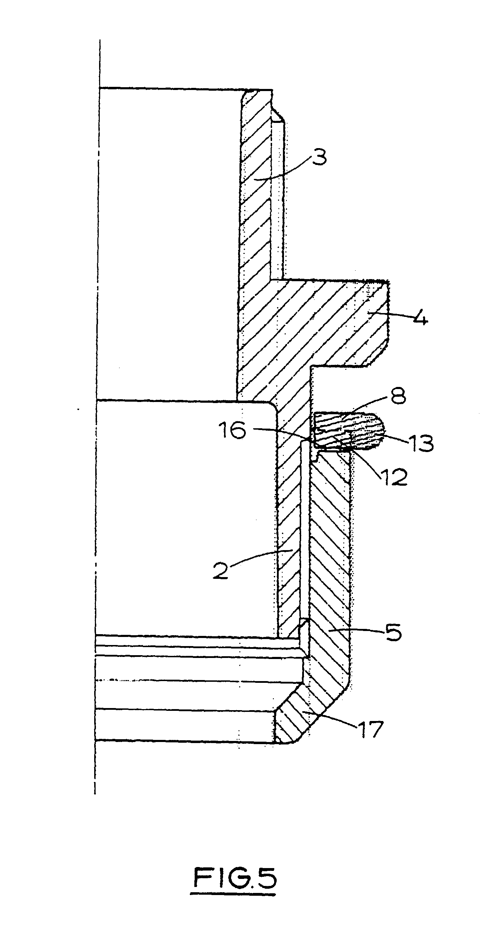

Figure 5 is a sectional view similar to Figure 4 but taken at a position 90° further about the axis of the coupling;
Figure 6 is a perspective view of a washer, being a component of the coupling; and
Figure 7 shows a locking tooth of the washer in more detail.

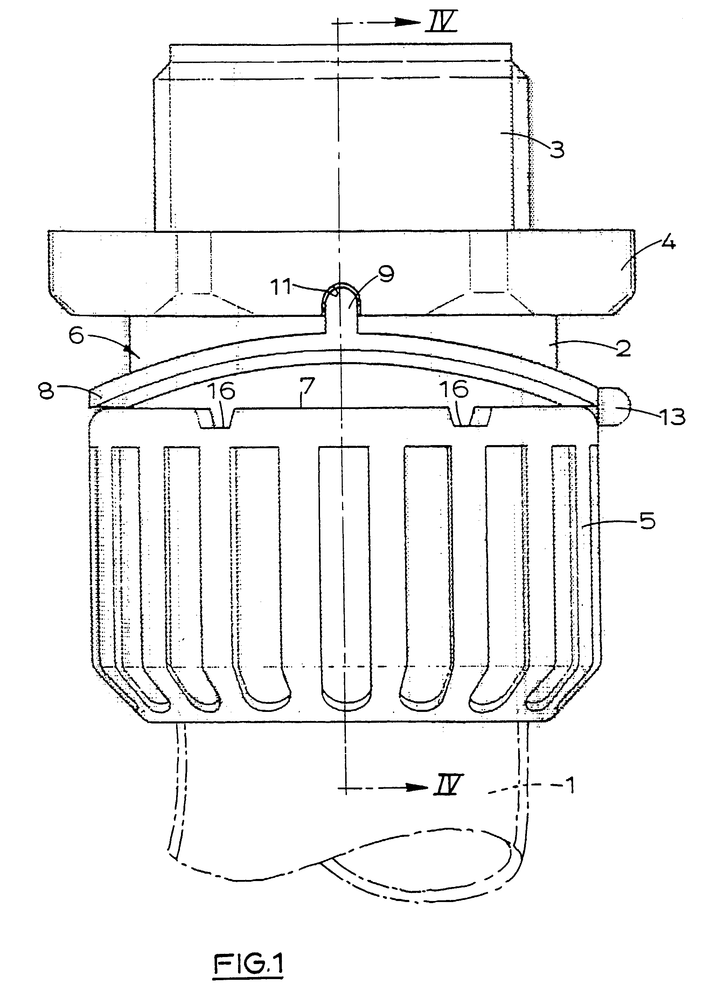

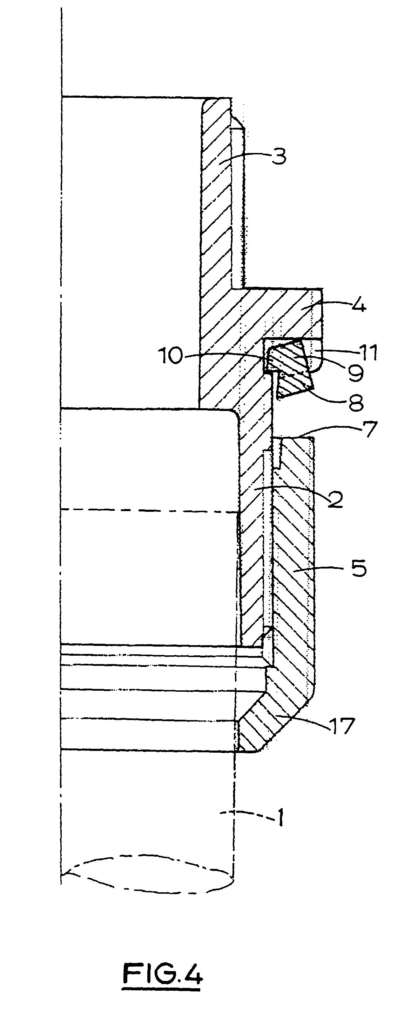

Referring to Figures 1 and 4, a coupling connects a flexible conduit 1 to a tubular body forming a stub pipe 2 and a mounting portion 3, both of which are externally screw-threaded and on opposite sides of an external flange 4. The coupling comprises a second part in the form of an internally screw-threaded collar 5, and also comprises a locking washer 6. The collar 5 can be screwed on to the threaded stub pipe 2 to secure an end portion of the conduit 1 within the stub pipe 2, the washer 6 being disposed about the stub pipe and trapped between an annular end face 7 of the collar and the flange 4.

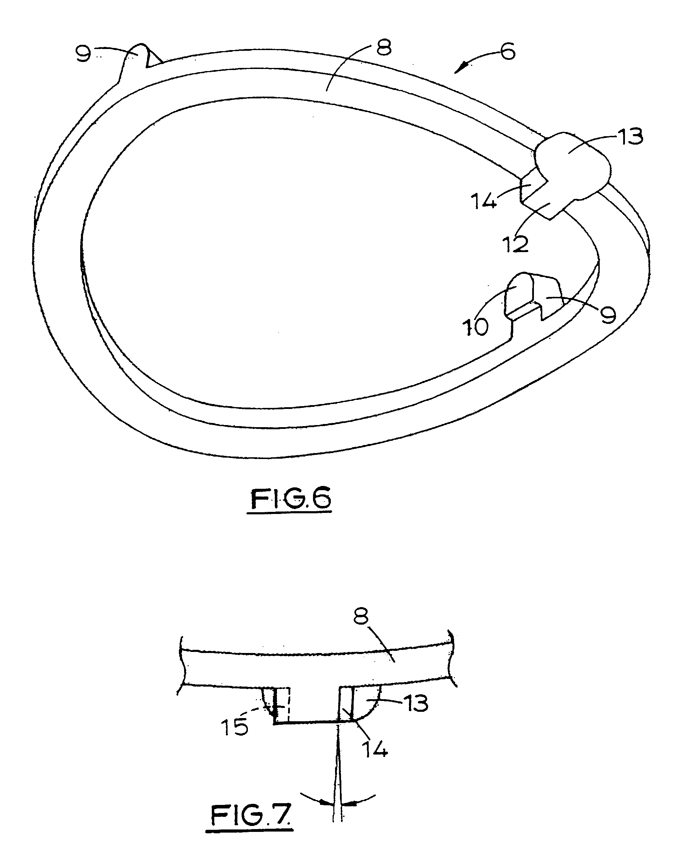

The washer 6, shown also in Figures 6 and 7, is formed as a plastics moulding and comprises a portion forming a continuous annular band 8. The band 8 is generally circular but in a relaxed state is of a wavy non-planar form. The material of which it is moulded is suitably springy to give it axial elasticity.

The washer comprises a pair of axially upstanding lugs 9 which are diametrically opposed to one another at two high points of the wavy band 8 (as viewed in Figure 1). The lugs each form a radially inwardly projecting tooth 10, which is illustrated also by Figure 4.

The flange 4 of the tubular body has two axially-facing notches 11 which are positioned to receive the lugs 9 of the washer. The notches form an undercut to the stub pipe 2 to receive the teeth 10, as seen in Figure 4.

Projecting axially from the band 8 in the opposite direction to the lugs 9, the washer comprises a locking tooth 12 positioned circumferentially mid-way between the lugs 9 at one of two low points of the washer (see Figure 1), the tooth 12 projecting towards the annular end face 7 of the collar 5. An operating tab 13 projects radially outwards from the tooth 12 and the band 8, projecting also beyond the outer diameter of the collar 5 so as to be readily engageable. As indicated in Figure 7, parallel, circumferentially facing, leading and trailing side faces 14 and 15 of the locking tooth extend from the band 8 at a small angle to the axis.

Six identical notches 16 are cut into the collar 5 in its end face 7, the notches being uniformly distributed about the axis of the collar. The notches are each adapted to receive the locking tooth 12 of the washer for rotational interengagement.

To assemble the coupling, the washer 6 is fitted over the stub pipe 2 so that the lugs 9 enter the notches 11 in the flange 4. The teeth 10 snap into the undercuts to retain the washer axially in place. The washer so becomes operatively coupled to the body of the coupling to prevent relative rotations.

The collar 5 is then fitted over the conduit 1 with its end face 7 directed towards the end of the conduit. A sealing ring (not shown) is placed around the conduit close to its end, the ring fitting tightly to the conduit. The conduit is inserted into the stub pipe 2 until the sealing ring abuts the end of the stub pipe 2.

The collar 5 is then advanced along the tube until its screw thread engages with that of the stub pipe 2. The collar 5 is then screwed onto the stub pipe. As the collar 5 is screwed on, the sealing ring becomes nipped between the end of the stub pipe 2 and an inturned lip 17 of the collar. This compresses the ring and causes it to be compressed against the conduit. With continued rotation, the end face 7 of the collar advances towards the washer 6. Eventually the axially projecting locking tooth 12 of the washer 6 touches the end face 7 of the collar. Further rotation of the collar results in the tooth entering the first notch 16 that it encounters. The leading side face 14 of the tooth is so inclined that the tooth becomes cammed aside by the opposing side face of the notch as rotation of the collar continues. Further rotation of the collar, in the screwing up direction, progressively flattens the washer 6, the resilience of the washer causing the tooth 12 to be urged into the notches successively. Once the required tightness for the coupling is reached, the tooth can reside in the nearest adjacent notch 16.

The inclination of the trailing side face 15 of the locking tooth is such that the tooth does not ride readily out of the notch 16 when the collar 5 is turned in the opposite, unscrewing, direction. The washer therefore effectively prevents unscrewing of the collar, and so release of the coupling, through vibration or otherwise.

The co-operating locking tooth 12 on the washer and the notches 16 on the collar so form in effect a ratchet which permits rotation of the collar relative to the washer (and the flange 4) in screwing up the coupling, but prevents unscrewing of the collar.

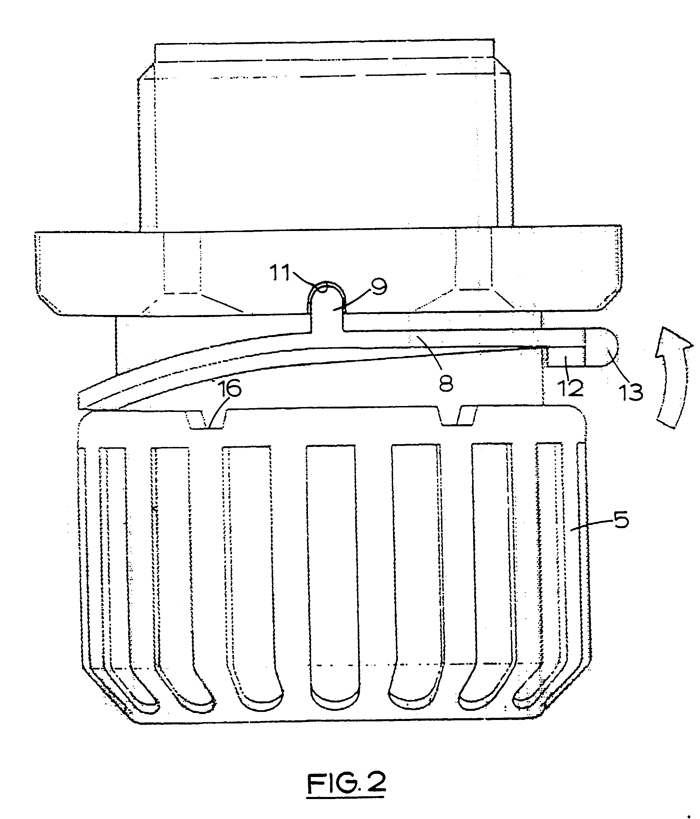

When the collar 5 is to be unscrewed, the radially projecting tab 13 can be displaced manually, axially away from the collar 5, to lift the tooth 12 out of the notch 16 in which it is resident, so freeing the collar 5 for removal. This is illustrated by Figure 2.

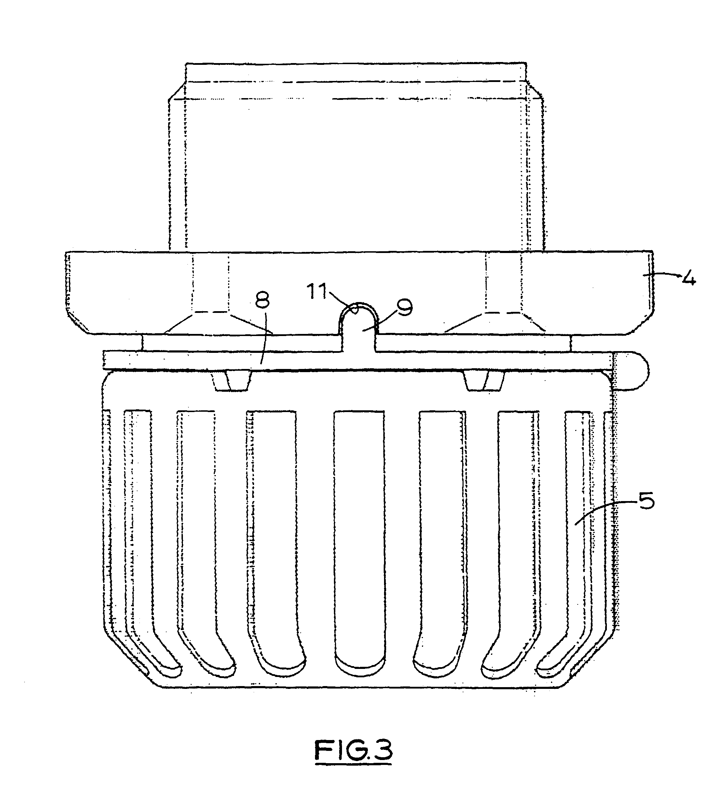

It is important that the collar cannot compress the washer to such an extent that no freedom remains to lift the locking tooth 12 out of the notch 16. To that end, and as can be seen from Figure 3 which shows the washer 6 in a fully compressed condition, the axial length of the lugs 9 projecting from the band 8 is greater than the axial depth of the notches 11, whereby the band (particularly at the tooth 12 and tab 13) is necessarily held at a distance axially from the flange 4.

## Claims

1. An assembly of components comprising interengageable first (2,3,4) and second (5) screw-threaded parts and a washer (6) retained between the first and second parts and operatively coupled (9,11) to the first threaded part to prevent rotation of the washer relative thereto, the washer presenting a first engagement formation (12) which is arranged so to engage with an opposing engagement formation (16) on the second threaded part (5) as operatively to resist mutual rotation between the first and second threaded parts in the unscrewing direction, characterised in that axial elastic compressibility of the washer is derived from its being of a wavy non-planar annular form, the co-operating engagement formations (12,16) on the washer (6) and on the second threaded part (5) being arranged to form a ratchet which permits rotation of the second part relative to the washer and relative to the first part (2,3,4) in screwing-up the assembly but prevents unscrewing of the second part by rotation in the opposite direction, the washer comprising means (13) accessible in the assembly for enabling an axial deflection of the band (8) of the washer (6) to be effected to disengage the engagement formations (12,16) and permit unscrewing of the threaded parts.

2. An assembly according to claim 1 in which the washer (6) is in the form of a closed loop.

3. An assembly according to either of claims 1 and 2 in which, to effect coupling of the washer (6) to the first threaded part (2,3,4), the washer comprises a pair of second engagement formations (9) arranged to engage with a pair of engagement formations (11) of the first part to prevent relative rotations.

4. An assembly according to claim 3 in which said second formations (9) of the washer (6) are distributed evenly to each side of the first engagement formation (12) which co-operates with the second threaded part (5).

5. An assembly according to claim 4 in which said second formations (9) are positioned at the opposite ends of a diameter, each at 90° about the axis from the first engagement formation (12).

6. An assembly according to any one of claims 3,4 and 5 in which said second engagement formations (9) of the washer (6) provide spacing means limiting the approach of the first threaded part (2,3,4) to the second threaded part (5), whereby to ensure that a separation remains between the first threaded part and the washer at the first engagement formation (12) when the first and second parts are fully assembled.

7. An assembly according to any one of claims 1 to 6 in which the second threaded part (5) is provided with a plurality of similar circumferentially-distributed said formations (16).

8. An assembly according to any one of claims 1 to 7 suitable for use as a coupling for flexible conduit, the first threaded part (2,3,4) forming a stub pipe (2) to be attached to a mounting and the second threaded part (5) being a collar which fits sealingly around an end portion of the conduit and secures it to the stub pipe.

## Patentansprüche

1. Anordnung aus Bauteilen mit gegenseitig in Eingriff bringbarem ersten (2, 3, 4) und zweiten (5) Gewindeteil und einer Scheibe (6), die zwischen dem ersten und dem zweiten Teil gehalten wird und mit dem ersten Gewindeteil gekoppelt (9, 11) ist, um eine Relativbewegung der Scheibe zu ihm zu unterbinden, wobei die Scheibe eine erste Eingriffsformation (12) aufweist, die so ausgebildet ist, daß sie mit einer gegenüberliegenden Eingriffsformation (16) an dem zweiten Gewindeteil (5) betrieblich in Eingriff steht, um ein gegenseitiges Verdrehen von erstem und zweitem Gewindeteil in Losschraubrichtung zu verhindern, **dadurch gekennzeichnet**, daß axiale elastische Kompressibililät der Scheibe dadurch gebildet wird, daß sie eine wellenförmige, nicht-ebene Ringform aufweist, die miteinander zusammenwirkenden Formationen (12, 16) an der Scheibe (6) und dem zweiten Gewindeteil (5) derart ausgebildet sind, daß sie eine Sperrklinke bilden, die eine Drehung des zweiten Teils relativ zu der Scheibe und relativ zu dem ersten Teil (2, 3, 4) in Festschraubrichtung der Anordnung ermöglicht, jedoch ein Losschrauben des zweiten Teils durch Drehen in die entgegengesetzte Richtung verhindert, wobei die Scheibe Mittel (13) aufweist, die in der Anordnung zugänglich sind, um eine axiale Auslenkung des Bandes (1) zum Lösen der Eingriffsformationen (12, 16) und zum Ermöglichen des Losschraubens der Gewindeteile zu gestatten.

2. Anordnung nach Anspruch 1, bei der die Scheibe (6) die Form einer geschlossenen Schleife aufweist.

3. Anordnung nach Anspruch 1 und 2, bei der zum Koppeln der Scheibe (6) mit dem ersten Gewindeteil (2, 3, 4) die Scheibe ein Paar von zweiten Eingriffsformationen (9) aufweist, die derart ausgebildet sind, daß sie mit einem Paar von Eingriffsformationen (11) des ersten Teils zum Unterbinden von Relativverdrehungen in Eingriff treten.

4. Anordnung nach Anspruch 3, bei der die zweiten Formationen (9) der Scheibe (6) gleichmäßig auf jede Seite der ersten Eingriffsformation (12) verteilt sind, die mit dem zweiten Gewindeteil (5) zusammenwirkt.

5. Anordnung nach Anspruch 4, bei der die zweiten Formationen (9) jeweils um 90° um die Achse gegenüber der ersten Eingriffsformation (12) versetzt an den entgegengesetzten Enden eines Durchmessers angeordnet sind.

6. Anordnung nach einem der Ansprüche 3, 4 und 5, bei der die zweiten Eingriffsformationen (9) der Scheibe (6) Distanzmittel darstellen, welche die Annäherung des ersten Gewindeteils (2, 3, 4) an das zweite Gewindeteil (5) begrenzen, um so sicherzustellen, daß zwischen dem ersten Gewindeteil und der Scheibe an der ersten Eingriffsformation (12) eine Trennung verbleibt, wenn das erste und das zweite Teil vollständig zusammengefügt sind.

7. Anordnung nach einem der Ansprüche 1 bis 6, bei der das zweite Gewindeteil (5) mit mehreren ähnlichen über den Umfang verteilten Formationen (16) ausgestattet ist.

8. Anordnung nach einem der Ansprüche 1 bis 7, geeignet zur Verwendung als Kupplungsstück für eine flexible Leitung, wobei das erste Gewindeteil (2, 3, 4) einen Rohrstutzen (2) bildet, der an einem Montageteil anzubringen ist, und das zweite Gewindeteil (5) eine Muffe ist, die abdichtend um einen Endabschnitt der Leitung herum angeordnet ist und diesen an den Rohrstutzen festlegt.

## Revendications

1. Ensemble de composants comprenant une première partie filetée (2,3,4) et une seconde partie filetée (5), qui peuvent engrener réciproquement, et une rondelle (6) retenue entre les première et seconde parties et couplée en fonctionnement (9,11) à la première partie filetée de manière à empêcher une rotation de la rondelle par rapport à cette partie, la rondelle présentant une première configuration d'engrènement (12), qui est agencée de manière à engrener avec une configuration d'engrènement opposée (16) située sur la seconde partie filetée (5) de manière à s'opposer en fonctionnement à une rotation mutuelle entre les première et seconde parties filetées dans le sens du dévissage, caractérisé en ce que la compressibilité élastique axiale de la rondelle est dérivée du fait qu'elle possède une forme annulaire ondulée non plane, les configurations d'engrènement coopérantes (12,16) situées sur la rondelle (6) et sur la seconde partie filetée (5) étant agencées de manière à former un dispositif à cliquet qui permet une rotation de la seconde partie par rapport à la rondelle et par rapport à la première partie (2,3,4) lors du vissage de l'ensemble, mais empêche le dévissage de la seconde partie sous l'effet d'une rotation en sens opposé, la rondelle comprenant des moyens (13) accessibles dans l'ensemble pour permettre une déviation axiale de la bande (8) de la rondelle (6) devant être exécutée pour dégager les configurations d'engrènement (12,16) et permettre un dévissage des parties filetées.

2. Ensemble selon la revendication 1, dans lequel la rondelle (6) se présente sous la forme d'une boucle fermée.

3. Ensemble selon l'une quelconque des revendications 1 et 2, dans lequel, pour réaliser l'accouplement de la rondelle (6) à la première partie filetée (2,3,4), la rondelle comporte un couple de secondes configurations d'engrènement (9) agencées de manière à engrener avec un couple de configurations d'engrènement (11) de la première partie pour empêcher des rotations relatives.

4. Ensemble selon la revendication 3, dans lequel lesdites secondes configurations (9) de la rondelle (6) sont réparties uniformément de chaque côté de la première configuration d'engrènement (12), qui coopère avec la seconde partie filetée (5).

5. Ensemble selon la revendication 4, dans lequel lesdites secondes configurations (9) sont positionnées aux extrémités opposées d'un diamètre, en étant pivotée de 90° autour de l'axe par rapport à la première configuration d'engrènement (12).

6. Ensemble selon l'une quelconque des revendications 3,4 et 5, dans lequel lesdites secondes configurations d'engrènement (9) de la rondelle (6) forment des moyens d'espacement limitant le rapprochement de la première partie filetée (2,3,4) vers la seconde partie filetée (5), ce qui garantit qu'une séparation subsiste entre la première partie filetée et la rondelle au niveau de la première configuration d'engrènement (12) lorsque les première et seconde parties sont complètement assemblées.

7. Ensemble selon l'une quelconque des revendications 1 à 6, dans lequel la seconde partie filetée (5) comporte une pluralité de configurations similaires (16) réparties circonférentiellement.

8. Ensemble selon l'une quelconque des revendications 1 à 7 convenant pour être utilisé en tant que raccord pour un conduit flexible, la première partie filetée (2, 3, 4) formant un bout de tuyau (2) devant être fixé à un support, et la seconde partie filetée (5) est un collet qui s'adapte d'une manière étanche autour d'une partie d'extrémité du conduit et le fixe au bout de tuyau.
